(19) **Europäisches Patentamt**

**European Patent Office**

**Office européen des brevets**

(11) Veröffentlichungsnummer: **0 261 074 B1**

(12) **EUROPÄISCHE PATENTSCHRIFT**

(45) Veröffentlichungstag der Patentschrift: **15.01.92**

(21) Anmeldenummer: **87810433.0**

(22) Anmeldetag: **29.07.87**

(51) Int. Cl.⁵: **G03B 27/73**

(54) **Verfahren zum Bestimmen der Belichtungswerte beim Kopieren farbpositiver Vorlagen auf Farbumkehrmaterial.**

(30) Priorität: **01.09.86 CH 3508/86**

(43) Veröffentlichungstag der Anmeldung:
**23.03.88 Patentblatt 88/12**

(45) Bekanntmachung des Hinweises auf die
Patenterteilung:
**15.01.92 Patentblatt 92/03**

(84) Benannte Vertragsstaaten:
**BE DE FR GB IT LU NL**

(56) Entgegenhaltungen:
**EP-A- 0 119 941      WO-A-86/00149**
**DE-A- 2 810 295      DE-A- 3 321 136**
**US-A- 3 447 871      US-A- 3 819 373**

(73) Patentinhaber: **Germann + Gsell AG**
**Fegistrasse 1**
**CH-8957 Spreitenbach(CH)**

(72) Erfinder: **Grossmann, Walter, Dr.**
**Wettsteinstrasse 59**
**CH-8332 Russikon(CH)**

(74) Vertreter: **Seifert, Helmut E.**
**RITSCHER & SEIFERT Patentanwälte VSP**
**Kreuzstrasse 82**
**CH-8032 Zürich(CH)**

Rank Xerox (UK) Business Services

**Beschreibung**

Die vorliegende Erfindung betrifft ein Verfahren zum Bestimmen der Belichtungswerte beim Kopieren farbpositiver Vorlagen auf Farbumkehrmaterial, bei welchem Verfahren die Farbdichte der Vorlage für jede der durch die spektrale Empfindlichkeit der Schichten des Kopiermaterials bestimmten drei Grundfarben gemessen wird, und aus den drei Farbdichten ein Helligkeitswert sowie zwei der drei möglichen Farbdichtedifferenzen gebildet und daraus die Belichtungswerte für die den drei Grundfarben entsprechenden Farbauszüge abgeleitet werden, sowie eine Vorrichtung zum Ausführen dieses Verfahrens.

Bei diesem gebräuchlichen Verfahren werden die Belichtungswerte (Belichtungszeit und/oder -intensität) für alle drei Farbauszüge so gesteuert, dass die Farbkopie eine vorgegebene mittlere Helligkeit aufweist. Abweichungen der Farbtönung der Farbvorlage (Diapositiv) von der Farbtönung einer Eich- oder Normalvorlage können teilweise mittels einer manuell einstellbaren Unterkorrektur ausgeglichen werden. Beim automatischen Bestimmen der Belichtungswerte mittels einer Bewertung der gesamten Fläche der Vorlage sind auch motivbedingte Fehler möglich, beispielsweise wenn der wichtigste Bildteil aus der Bildmitte an den Rand verschoben ist oder wenn die Helligkeit des wichtigsten Bildteils stark von der Helligkeit des restlichen Bilds abweicht. Um solche Fehler auszugleichen, ist zusätzlich zur automatischen Bestimmung der Belichtungswerte die Bewertung der Vorlage durch eine erfahrene Bedienungsperson erforderlich. Für eine vollautomatische Bestimmung der Belichtungswerte ist darum auch schon ein Verfahren bekannt, bei dem die Farbdichten nicht aus der gesamten Fläche der Vorlage bestimmt werden, sondern diese Fläche bereichsweise ausgemessen und jeder Bereich entsprechend seiner Lage im Bild gewichtet wird.

Eine weitere Schwierigkeit beim automatischen Bestimmen der Belichtungswerte für Kopien von Farbdiapositiven ist darin begründet, dass für die Diapositivfilme unterschiedlichen Fabrikats unterschiedliche Farbstoffe verwendet werden und die spektralen Empfindlichkeiten der Schichten des Kopiermaterials nicht mit den entsprechenden Reizkurven des menschlichen Auges übereinstimmen. Das hat zur Folge, dass Kopien von Diapositiven unterschiedlichen Fabrikats für das menschliche Auge unterschiedlich erscheinen, auch wenn die Diapositive genau gleich aussehen. Diese Farbfehler können durch eine zusätzliche Korrektur der Belichtungswerte behoben werden, was aber wieder das Eingreifen einer Bedienungsperson erfordert.

Es ist darum das Ziel der vorliegenden Erfindung, ein Verfahren anzugeben, beim dem die durch unterschiedliche Farbstoffe im Diapositiv bewirkten Farbunterschiede der Kopie beim automatischen Bestimmen der Belichtungswerte korrigiert werden.

Erfindungsgemäss wird das bei einem Verfahren der eingangs genannten Art dadurch erreicht, dass zum Berichtigen der durch die unterschiedliche spektrale Empfindlichkeit der Schichten des Kopiermaterials und der entsprechenden Reizkurven des menschlichen Auges bewirkten Abweichungen des Farbtons und der -sättigung der Kopie gegenüber dem Diapositiv zusätzlich die Farbdichten eines Testdiapositivs, das mit unkorrigierten Belichtungszeiten eine Kopie mit guter Uebereinstimmung der Farbtöne und der -sättigung ergibt, in den drei Grundfarben des Kopiermaterials ausgemessen werden, und die Farbdichten der Vorlage und des Testdiapositivs in den drei Reizfarben ausgemessen werden und die korrigierten Belichtungszeiten aus den gemäss nachfolgenden Formeln bestimmten korrigierten Farbdichtedifferenzen abgeleitet werden:

$$RG_k^* = RG_{Vk} + (RG_V - RG_T)_k - (RG_V - RG_T)_a \quad (1)$$

$$BG_k^* = BG_{Vk} + (BG_V - BG_T)_k - (BG_V - BG_T)a \quad (2)$$

worin RG und BG zwei der drei möglichen Farbdichtedifferenzen sind und die Indizes V, T, k und a angeben, ob die entsprechenden Messungen an der Vorlage oder am Testdiapositiv bzw. in den Grundfarben des Kopiermaterials oder in den Reizfarben durchgeführt wurden.

Eine erfindungsgemäße Vorrichtung ist im Anspruch 5 beschrieben.

Das erfindungsgemässe Verfahren ermöglicht erstmals das vollautomatische Bestimmen der Belichtungswerte beim Kopieren von Diapositivvorlagen auf Farbkopiermaterial, wobei die Belichtungswerte automatisch auch mögliche Farbänderungen auf der Kopie berichtigen, die durch unterschiedliche Farbstoffe in den Diapositiven unterschiedlicher Hersteller bedingt sind.

Nachfolgend wird das erfindungsgemässe Verfahren beispielsweise beschrieben.

Zum Ausführen des erfindungsgemässen Verfahrens wird vorzugsweise eine Vorrichtung verwendet, die in einer Anlage zum automatischen Kopieren von Farbdiapositiven (Printer) in der Transportrichtung der Dias vor der Projektionseinrichtung geordnet ist. Die Vorrichtung enthält wahlweise einen optoelektronischen Sensor, dem sequentiell sechs Farbfilter vorgeschaltet werden können oder sechs optoelektronische Wandler, denen je ein Farbfilter zugeordnet ist und auf denen das Dia gleichzeitig gesamthaft oder nacheinander bereichsweise abgebildet wird. Die Durchlässigkeit von drei Filtern entspricht der spektralen Empfindlichkeit der Schichten des Kopiermaterials, die Durchlässigkeit der weiteren drei Filter den entsprechenden Reizkurven des menschlichen Auges. Die analogen Ausgangssignale der Sensoren werden zur Anpassung an die Schwärzungskurve des Kopiermaterials logarithmisch verstärkt und für die weitere Verarbeitung in einem Elektronenrechner in digitale Signale umgewandelt.

Für die getrennte Verarbeitung der Farbwerte vom Helligkeitswert werden von zwei der drei Ausgangssignale ($R_k$, $G_k$, $B_k$) der auf die Grundfarben des Kopiermaterials eingestellten Sensoren und von den entsprechenden zwei der drei Ausgangssignale ($R_a$, $G_a$, $B_a$) der auf die Reizkurven des menschlichen Auges eingestellten Sensoren Differenzen gebildet, beispielsweise:
$R_k - G_k = RG_k$; $B_k - G_k = BG_k$ bzw. $R_a - G_a = RG_a$ und $B_a - G_a = BG_a$
Es versteht sich, dass ebensogut die Differenzen $B_k - R_k$ bzw. $B_a - R_a$ verwendet werden können.

In einem ersten Verfahrensschritt werden von einem normalbelichteten Diapositiv (Testdia), das gute, d.h. mit dem Dia farblich übereinstimmende Kopien liefert, die vorgenannten Farbdichtedifferenzen für die Schichten des Kopiermaterials $RG_{Tk}$, $BG_{Tk}$ und für die Reizkurven des Auges $RG_{Ta}$, $BG_{Ta}$ bestimmt. Weil diese Differenzen praktisch gleich den entsprechenden Differenzen $RG_{Vk}$, $BG_{Vk}$ und $RG_{Va}$, $BG_{Va}$ irgendeines gut belichteten Diapositivs des gleichen Filmfabrikats sind und darum die Differenzen $RG_{Ta} - RG_{Va}$ usw. = Null werden, ist es vorteilhaft (aber nicht notwendig), wenn als Testdia ein Diapositiv eines häufig verwendeten Fabrikats gewählt wird.

Für Diapositiv-Vorlagen, deren Farbgleichgewicht von dem des Testdias abweicht, ergeben sich für die Differenzen $RG_{Ta} - RG_{Va}$ usw. endliche Differenzwerte. Dabei ist die für die Abweichung des Farbgleichgewichts in den Grundfarben des Kopiermaterials gemessene Differenz grösser als die in den Reizfarben des Auges gemessene, und für beide gelten die Gleichungen:

$$(RG_V - RG_T)_k = b_{11}(RG_V - RG_T)_a - b_{12}(BG_V - BG_T)_a$$
$$(BG_V - BG_T)_k = b_{21}(RG_V - RG_T)_a - b_{22}(BG_V - BG_T)_a$$

worin die Koeffizienten $b_{11}$ und $b_{22}$ die Farbsättigung und die Koeffizienten $b_{12}$ und $b_{21}$ den Farbton betreffen.

Im folgenden werden unter Reizfarben die drei durch Maxima in den spektralen Reizkurven des menschlichen Auges bestimmte grundfarben verstanden.

Die Bestimmung dieser Koeffizienten erfolgt einfacherweise graphisch. Dazu werden eine Mehrzahl Diapositive des gleichen Fabrikats wie das Testdia, deren Farbverteilung aber vom normalen Farbgleichgewicht abweicht, vermessen und die Werte für $(RG_T - RG_V)_a$; $(BG_T - BG_V)_a$; $(RG_T - RG_V)_k$ und $(BG_T - BG_V)_k$ in ein Koordinatensystem, das zwei den Grundfarben und im vorliegenden Beispiel den Grundfarben Rot und Grün zugeordnete Achsen aufweist, eingezeichnet. Die Hauptkoeffizienten $b_{11}$ und $b_{22}$ bestimmen dann den Abstandsausgleich vom Koordinatennullpunkt und die sekundären Koeffizienten $b_{12}$ und $b_{21}$ korrigieren eine mögliche Abweichung der Neigung.

Die obige für das Testdia geltende Gleichung gilt nicht für Diapositivmaterial, das andere Farbstoffe als das Testdiapositiv enthält, d.h. es ergibt sich eine Abweichung zwischen der auf der linken Seite stehenden gemessenen Farbdichtedifferenz und der Summe der beiden auf der rechten Seite stehenden und mit Hilfe der für das Material des Testdiapositivs geltenden Koeffizienten berechneten Farbdichtedifferenzen. Diese Abweichung entspricht der unterschiedlichen Wirkung der verschiedenartigen Farbstoffe auf das Kopiermaterial und auf das menschliche Auge. Es versteht sich, dass diese Abweichung für Farbdiapositive vom gleichen Fabrikat wie das Testdiapositiv nicht, dagegen für alle Diapositive anderer Fabrikate besteht.

Zum Beheben dieser Abweichung kann dann der gemessene Wert für die Farbdichtedifferenz in erster Näherung mit den numerisch grösseren Gliedern und ohne Einbezug der Koeffizienten $b_{11}$ und $b_{22}$ korrigiert werden entsprechend:

$$RG_k^* = RG_{Vk} + (RG_V - RG_T)_k - (RG_V - RG_T)_a \qquad (1)$$
$$BG_k^* = BG_{Vk} + (BG_V - BG_T)_k - (BG_V - BG_T)_a \qquad (2)$$

Für eine vollständige Beseitigung der Abweichung wird der gemessene Wert für die Farbdichtedifferenz mit der gesamten Gleichung für die korrigierte Farbdichtedifferenz korrigiert, entsprechend:

$$RG_k^{**} = RG_{Vk} + (RG_V - RG_T)_k - b_{11}(RG_V - RG_T)_a - b_{12}(BG_V - BG_T)_a \qquad (3)$$
$$BG_k^{**} = BG_{Vk} + (BG_V - BG_T)_k - b_{21}(RG_V - RG_T)_a - b_{22}(BG_V - BG_T)_a \qquad (4)$$

Die gemessenen und gemäss obigen Vorschriften korrigierten Farbdichtewerte bzw. -differenzen werden dann in bekannter Weise in drei Farbbelichtungszeiten für den Verschluss des Projektionsobjektivs am Kopiergerät (Printer) transformiert.

Es versteht sich, dass die gemessenen und für das vorliegende Verfahren benötigten Farbdichtedifferenzen geändert werden können, um Helligkeits- und Farbabweichungen, die beim Kopieren von unter- und überbelichteten Diapositiven entstehen, zu korrigieren (Slope-Korrektur), dass durch Zufügen eines Multiplikators zu den Korrekturgliedern die Farbbelichtungszeiten an d ie Kontrasteigenschaften des verwendeten Kopiermaterials angepasst und dass durch Zufügen eines additiven Glieds zu diesen Korrekturgliedern der Nullpunkt der Farbvektoren im Koordinatensystem verschoben werden kann.

**Patentansprüche**

1. Verfahren zum Bestimmen der Belichtungswerte beim Kopieren farbpositiver Vorlagen auf Farbumkehrmaterial,
bei welchem Verfahren die Farbdichte der Vorlage für jede der durch die spektrale Empfindlichkeit der Schichten des Kopiermaterials bestimmten drei Grundfarben gemessen wird,
und aus den drei Farbdichten ein Helligkeitswert sowie zwei der drei möglichen Farbdichtedifferenzen gebildet und daraus die Belichtungswerte für die den drei Grundfarben entsprechenden Farbauszüge abgeleitet werden, dadurch gekennzeichnet, dass zum Berichtigen der durch die unterschiedliche spektrale Empfindlichkeit der Schichten des Kopiermaterials und der entsprechenden Reizkurven des menschlichen Auges bewirkten Abweichungen des Farbtons und der -sättigung der Kopie gegenüber dem Diapositiv zusätzlich die Farbdichten eines Testdiapositivs, das mit unkorrigierten Belichtungszeiten eine Kopie mit guter Uebereinstimmung der Farbtöne und der -sättigung ergibt, in den drei Grundfarben des Kopiermaterials ausgemessen werden,
und die Farbdichte der Vorlage und des Testdiapositivs in den drei Reizfarben ausgemessen werden und die korrigierten Belichtungszeiten aus den gemäss nachfolgenden Formeln bestimmten korrigierten Farbdichtedifferenzen abgeleitet werden:

$$RG_k^* = RG_{Vk} + (RG_V - RG_T)k - (RG_V - RG_T)_a \quad (1)$$
$$BG_k^* = BG_{Vk} + (BG_V - BG_T)_k - (BG_V - BG_T)_a \quad (2)$$

worin RG und BG zwei der drei möglichen Farbdichtedifferenzen sind
und die Indizes V, T, k und a angeben, ob die entsprechenden Messungen an der Vorlage oder am Testdiapositiv, bzw. in den Grundfarben des Kopiermaterials oder in den Reizfarben durchgeführt wurden.

2. Verfahren nach Anspruch 1, dadurch gekennzeichnet, dass die korrigierten Farbdichtedifferenzen durch Subtraktion einer weiteren in den Reizfarben gemessenen Differenz zwischen den Farbdichtedifferenzen der Vorlage und des Testdiapositivs feinkorrigiert werden, so dass die folgenden Formeln entstehen:

$$RG_k^{**} = RG_{Vk} + (RG_V-RG_T)_k-b_{11}(RG_V-RG_T)_a-b_{12}(BG_V-BG_T)_a \quad (3)$$
$$BG_k^{**} = BG_{Vk} + (BG_V-BG_T)_k-b_{21}(RG_V-RG_T)_a-b_{22}(BG_V-BG_T)_a \quad (4)$$

worin die Koeffizienten $b_{11}$, $b_{12}$, $b_{21}$ und $b_{22}$ graphisch bestimmt werden durch Eintragen der Messwerte von Vorlagen, deren Farbdichten vom normalen Farbgleichgewicht abweichen, in ein Koordinatensystem.

3. Verfahren nach Anspruch 1 oder 2, dadurch gekennzeichnet, dass zum Anpassen der korrigierten oder feinkorrigierten Farbdichtedifferenzen an die Kontrasteigenschaften des Kopiermaterials in den Formeln (1) und (2) bzw. (3) und (4) die in Klammern gesetzten Differenzen mit Faktoren $f_R$ bzw. $f_B$ multipliziert werden.

4. Verfahren nach Anspruch 1 oder 2 oder 3, dadurch gekennzeichnet, dass für eine von den Farbdichtewerten der Vorlage oder des Testdiapositivs unabhängige Verschiebung des Nullpunkts der Farbvektoren dieser Farbdichtewerk in einem Koordinatensystem jeder der Formeln (1), (2) oder (3), (4) ein additives Glied zugeordnet wird.

5. Vorrichtung zum Bestimmen der Belichtungswerte beim Kopieren farbpositiver Vorlagen auf Farbumkehrmaterial, enthaltend
eine Einrichtung zum Messen der Lichtdurchlässigkeit des zu kopierenden Farbdiapositivs, bzw. eines Testdiapositivs, in den von der spektralen Empfindlichkeit der drei Schichten des Kopiermaterials definierten Grundfarben sowie in den drei Reizfarben, und
einen Rechner, dessen Steuerung derart ausgebildet ist, daß er korrigierte Farbdichtedifferenzen nach den Formeln (1) und (2) des Anspruchs 1 berechnet und aus den korrigierten Farbdichtedifferenzen und aus dem Helligkeitswert des zu kopierenden Farbdiapositivs die Belichtungswerte für die den drei Grundfarben entsprechenden Farbauszüge berechnet.

6. Vorrichtung nach Anspruch 5, dadurch gekennzeichnet, dass die Messeinrichtung einen photoelektrischen Sensor enthält und Mittel, um diesem Sensor nacheinander drei Farbfilter entsprechend der spektralen Empfindlichkeit der drei Schichten des Kopiermaterials und drei Farbfilter entsprechend den Reizfarben vorzuschalten.

7. Vorrichtung nach Anspruch 5, dadurch gekennzeichnet, dass die Messeinrichtung sechs photoelektrische Sensoren, denen je ein Farbfilter zugeordnet ist, enthält, wobei die Lichtdurchlässigkeit von drei dieser Farbfilter der spektralen Empfindlichkeit der Schichten des Kopiermaterials und die Lichtdurchlässigkeit der weiteren drei Farbfilter der spektralen Empfindlichkeit der Reizfarben Auges entspricht.

8. Vorrichtung nach Anspruch 6 oder 7, dadurch gekennzeichnet, dass dem photoelektrischen Sensor bzw. den Sensoren ein optisches System zugeordnet ist, das die gesamte Fläche des Farbdiapositivs gleichzeitig auf dem Sensor bzw. den Sensoren abbildet.

9. Vorrichtung nach Anspruch 6 oder 7, dadurch gekennzeichnet, dass dem photoelektrischen Sensor bzw. den Sensoren ein optisches Systems zugeordnet ist, das die Fläche des Farbdiapositivs bereichsweise und sequentiell auf dem Sensor bzw. den Sensoren abbildet.

**Claims**

1. Method for determining the exposure values when copying colour-positive patterns on colour reversal material, by which method the colour density of the pattern is measured for each of the three primary colours determined by the spectral sensitivity of the layers of the copying material, and from the three colour densities a brightness value and also two of the three possible colour density differences are formed, and therefrom are derived the exposure values for the colour separations corresponding to the three primary colours, characterised in that, for the purpose of rectifying the deviations of the colour tone and of the colour saturation of the copy in relation to the diapositive, caused by the different spectral sensitivity of the layers of the copying material and the corresponding stimulation curves of the human eye, in addition the colour densities of a test diapositive, which with uncorrected exposure times produces a copy with good conformity of the colour tones and saturation, are measured in the three primary colours of the copying material and the colour density of the pattern and of the test diapositive are measured in the three stimulation colours and the corrected exposure times are derived from the corrected colour density differences determined according to the following formulae:

$$RG_k{}^* = RG_{Vk} + (RG_V - RG_T)_k - (RG_V - RG_T)_a \quad (1)$$

$$BG_k{}^* = BG_{Vk} + (BG_V - BG_T)_k - (BG_V - BG_T)_a \quad (2)$$

in which RG and BG are two of the three possible colour density differences and the indices V, T, k and a indicate whether the corresponding measurements were carried out on the pattern or on the test diapositive or in the primary colours of the copying material or in the stimulation colours respectively.

2. Method according to claim 1, characterised in that the corrected colour density differences are finely corrected by subtraction of a further difference, measured in the stimulation colours, between the colour density differences of the pattern and of the test diapositive so that the following formulae result:

$$RG_k{}^{**} = RG_{Vk} + (RG_V-RG_T)_k - b_{11}(RG_V-RG_T)_a - b_{12}(BG_V-BG_T)_a \quad (3)$$
$$BG_k{}^{**} = BG_{Vk} + (BG_V-BG_T)_k - b_{21}(RG_V-RG_T)_a - b_{22}(BG_V-BG_T)_a \quad (4)$$

in which the coefficients $b_{11}$, $b_{12}$, $b_{21}$ and $b_{22}$ are determined graphically by recording in a system of coordinates the measured values of patterns, the colour densities of which deviate from the normal colour balance.

3. Method according to claim 1 or 2, characterised in that for the purpose of adapting the corrected or finely corrected colour density differences to the contrast properties of the copying material in formulae (1) and (2) or (3) and (4) respectively, the differences placed in brackets are multiplied by factors $f_R$ or $f_B$ respectively.

4. Method according to claim 1 or 2 or 3, characterised in that for a displacement, irrespective of the colour density values of the pattern or of the test diapositive, of the zero point of the colour vectors of these colour density values in a system of coordinates, an additive element is associated with each of the formulae (1), (2) or (3), (4).

5. Arrangement for determining the exposure values when copying colour-positive patterns on colour reversal material, containing a device for measuring the light-transmitting capacity of the colour diapositive to be copied, or a test diapositive respectively, in the primary colours defined by the spectral sensitivity of the three layers of the copying material and also in the three stimulation colours, and a computer, the control of which is developed such that it calculates corrected colour density differences according to formulae (1) and (2) of claim 1 and calculates, from the corrected colour density differences and from the brightness value of the colour diapositive to be copied, the exposure values for the colour separations corresponding to the three primary colours.

6. Arrangement according to claim 5, characterised in that the measuring device contains a photoelectric sensor and means in order to connect in series with this sensor one after the other three colour filters in accordance with the spectral sensitivity of the three layers of the copying material and three colour filters in accordance with the stimulation colours.

7. Arrangement according to claim 5, characterised in that the measuring device contains six photoelectric sensors, with each of which a colour filter is associated, the light-transmitting capacity of three of these colour filters corresponding to the spectral sensitivity of the layers of the copying material and the light-transmitting capacity of the three further colour filters corresponding to the spectral sensitivity of the stimulation colours.

8. Arrangement according to claim 6 or 7, characterised in that associated with the photoelectric sensor or sensors respectively there is an optical system which simultaneously copies the whole area of the colour diapositive on the sensor or sensors.

9. Arrangement according to claim 6 or 7, characterised in that associated with the photoelectric sensor or sensors respectively there is an optical system which copies the area of the colour diapositive zone-wise and sequentially on the sensor or sensors.

**Revendications**

1. Méthode pour déterminer les valeurs d'exposition dans le copiage de diapositives sur matériel réversible, dans laquelle méthode la pureté colorimétrique de la diapositive est mesurée pour chacune des trois couleurs fondamentales déterminées par la sensibilité spectrale des couches du matériel de copiage et à partir des trois puretés colorimétriques une valeur de luminosité ainsi que deux des trois différences de pureté colorimétrique possibles sont formées et à partir de cela les valeurs d'exposition pour les extraits de couleur correspondant aux trois couleurs fondamentales sont déduites, caractérisée en ce que pour corriger les écarts de la nuance et de la saturation de couleur de la copie par rapport à la diapositive provoqués par la sensibilité spectrale différente des couches du matériel de copiage et des courbes de stimulation correspondantes de l'oeil humain, les puretés colorimétriques d'une diapositive d'essai, qui donne avec des temps d'exposition non corrigés une copie avec une bonne concordance des nuances et de la saturation de couleur, sont mesurées en plus dans les trois couleurs fondamentales du matériel de copiage, et les puretés colorimétriques de la diapositive et de la diapositive d'essai sont mesurées dans les trois couleurs de stimulation de couleur et les temps d'exposition corrigés sont déduits à partir des différences de pureté colorimétrique corrigées déterminées d'après les formules suivantes :

$$RG_k^* = RG_{Vk} + (RG_V - RG_T)_k - (RG_V - RG_T)_a \quad (1)$$
$$BG_k^* = BG_{Vk} + (BG_V - BG_T)_k - (BG_V - BG_T)_a \quad (2)$$

où RG et BG sont deux des trois différences de pureté colorimétrique possibles et les indices $_V$, $_T$, $_k$ et a indiquent si les mesures correspondantes ont été réalisées sur la diapositive ou la diapositive d'essai, resp. dans les couleurs fondamentales du matériel de copiage ou dans les couleurs de stimulation.

2. Méthode selon la revendication 1, caractérisée en ce que les différences de pureté colorimétrique corrigées par soustraction d'une autre différence mesurée dans les couleurs de stimulation entre les différences de pureté colorimétrique de la diapositive et de la diapositive d'essai sont corrigées avec précision de sorte que l'on a les formules suivantes :

$$RG_k^{**} = RG_{Vk} + (RG_V - RG_T)_k - b_{11}(RG_V - RG_T)_a - b_{12}(BG_V - BG_T)_a \quad (3)$$
$$BG_k^{**} = BG_{Vk} + (BG_V - BG_T)_k - b_{21}(RG_V - RG_T)_a - b_{22}(BG_V - BG_T)_a \quad (4)$$

où les coefficients $b_{11}$, $b_{12}$, $b_{21}$ et $b_{22}$ sont déterminés graphiquement par inscription des valeurs de mesure de diapositives dont les puretés colorimétriques diffèrent de la balance des couleurs normale dans un système de coordonnées.

3. Méthode selon la revendication 1 ou 2, caractérisée en ce que pour adapter les différences de pureté colorimétrique corrigées ou corrigées avec précision aux caractéristiques de contraste du matériel de copiage les différence mises entre parenthèses dans les formules (1) et (2) resp. (3) et (4) doivent être multipliées avec les facteurs $f_R$ resp. $f_B$.

4. Méthode selon la revendication 1 ou 2 ou 3, caractérisée en ce que pour un décalage de l'origine des vecteurs de couleurs de ces valeurs de pureté colorimétrique indépendant des valeurs de pureté colorimétrique de la diapositive ou de la diapositive d'essai dans un système de coordonnées, un terme additif est attribué à chacune des formules (1), (2) ou (3), (4)

5. Dispositif pour déterminer les valeurs d'exposition dans le copiage de diapositives en couleurs sur matériel réversible comprenant un dispositif pour mesurer la transparence à la lumière de la diapositive en couleur à copier, resp. de la diapositive d'essai, dans les couleurs fondamentales définies par la sensibilité spectrale des trois couches du matériel de copiage ainsi que dans les trois couleurs de stimulation, et un ordinateur dont la commande est prévue de telle sorte qu'il calcule les différences de pureté colorimétrique d'après les formules (1) et (2) de la revendication 1 et calcule à partir des différences de pureté colorimétrique corrigées et à partir de la valeur de luminosité de la diapositive en couleurs à copier les valeurs d'exposition pour les extraits de couleur correspondant aux trois couleurs fondamentales.

6. Méthode selon la revendication 5, caractérisée en ce que le dispositif de mesure contient un capteur photoélectrique et un moyen pour monter l'un après l'autre en amont de ce capteur trois filtres colorés correspondant à la sensibilité spectrale des trois couches du matériel de copiage et trois filtres colorés correspondant aux couleurs de stimulation.

7. Dispositif selon la revendication 5, caractérisé en ce que le dispositif de mesure contient six capteurs photoélectriques à chacun desquels est attribué un filtre coloré, la transparence à la lumière de trois de ces filtres colorés correspondant à la sensibilité spectrale des couches du matériel de copiage et la transparence à la lumière des trois autres filtres à la sensibilité spectrale des couleurs de stimulation de l'oeil humain.

8. Dispositif selon la revendication 6 ou 7, caractérisé en ce qu'un système optique qui représente l'ensemble de la surface de la diapositive en couleurs simultanément sur le capteur resp. les capteurs est attribué au capteur photoélectrique resp. aux capteurs.

9. Dispositif selon la revendication 6 ou 7, caractérisé en ce qu'un système optique qui représente la surface de la diapositive en couleurs par zones et séquentiellement sur le capteur resp. les capteurs est attribué au capteur photoélectrique resp. aux capteurs.